# EUROPÄISCHE PATENTSCHRIFT

(11) **EP 2 486 299 B1**
(45) Veröffentlichungstag und Bekanntmachung des Hinweises auf die Patenterteilung: **29.01.2014**
(21) Anmeldenummer: 10768223.9
(22) Anmeldetag: 06.10.2010
(51) Int. Cl.: F16H 57/08, F16H 63/30

(54) **GETRIEBEVORRICHTUNG UND VERFAHREN ZUM BETREIBEN EINER GETRIEBEVORRICHTUNG**
TRANSMISSION DEVICE AND METHOD FOR OPERATING A TRANSMISSION DEVICE
DISPOSITIF DE TRANSMISSION, ET PROCEDE DE MISE EN OEUVRE D'UN DISPOSITIF DE TRANSMISSION

(30) Priorität: 09.10.2009 DE 102009045508
(43) Veröffentlichungstag der Anmeldung: 15.08.2012
(73) Patentinhaber: ZF Friedrichshafen AG, 88038 Friedrichshafen (DE)
(72) Erfinder: ZIEMER, Peter, 88069 Tettnang (DE); SCHMIDT, Thilo, 88074 Meckenbeuren (DE); GIERER, Georg, 88079 Kressbronn (DE); BAUKNECHT, Gert, 88048 Friedrichshafen (DE); SCHIELE, Peter, 88079 Kressbronn (DE); LINDNER, Thomas, 88079 Kressbronn (DE)
(86) Internationale Anmeldenummer: PCT/EP2010/064933
(87) Internationale Veröffentlichungsnummer: WO 2011/042470

(56) Entgegenhaltungen:
- DE-A1- 19 742 644
- US-A- 3 279 573
- US-A1- 2008 305 911

## Beschreibung

Die Erfindung betrifft eine Getriebevorrichtung und ein Verfahren zum Betreiben einer Getriebevorrichtung gemäß der im Oberbegriff des Patentanspruches 1 bzw. 9 näher definierten Art.

Aus der Praxis bekannte Getriebevorrichtungen bzw. Stufenautomatgetriebe sind zur Darstellung verschiedener Übersetzungen üblicherweise mit hydraulisch betätigten Reibschaltelementen ausgeführt. Um derartige Getriebevorrichtungen mit einem möglichst hohen Wirkungsgrad betreiben zu können werden einzelne Reibschaltelemente auch durch Klauenschaltelemente ersetzt, die im Vergleich zu Reibschaltelementen durch geringere Schleppmomente gekennzeichnet sind. Die Betätigungskolben der Reib- bzw. Klauenschaltelemente werden im Betrieb einer Getriebevorrichtung bevorzugt einseitig in Schließrichtung hydraulisch betätigt sowie über eine Rückstellfedereinrichtung in Öffnungsrichtung mit einer Federkraft beaufschlagt und bei entsprechend niedrigem Betätigungsdruck aus einem Kraftfluss der Getriebevorrichtung abgeschaltet bzw. in einen geöffneten Betriebszustand überführt.

Darüber hinaus sind aus der Praxis auch Schaltelemente bekannt, die im Bereich ihrer Betätigungskolben sowohl in Schließrichtung als auch in Öffnungsrichtung mit hydraulischen Betätigungsdrücken beaufschlagt werden, wobei dann eine in Öffnungsrichtung eines Schaltelementes wirkende Rückstellfedereinrichtung nicht mehr zwingend erforderlich ist. In Abhängigkeit des jeweils vorliegenden Anwendungsfalles können jeweils Rückstellfedereinrichtungen mit geringer Federrate zum Halten des Betätigungskolbens in der zu einem geöffneten Betriebszustand des Schaltelementes äquivalenten Ausgangsstellung vorgesehen sein.

Bekannterweise weist die zusätzliche hydraulische Rückstellung derartiger Schaltelemente jeweils einen als Differenzkolben ausgebildeten Betätigungskolben bzw. Doppelkolben auf. Dabei ist eine erste Wirkfläche des Betätigungskolbens, an welchem der in Schließrichtung des Schaltelementes wirkende Betätigungsdruck anliegt, größer als eine zweite Wirkfläche des Betätigungskolbens, an welcher ein in Öffnungsrichtung des Schaltelementes wirkender Betätigungsdruck anlegbar ist. Wird ein solcher Differenzkolben gleichzeitig im Bereich der ersten Wirkfläche und im Bereich der zweiten Wirkfläche jeweils mit einem gleich hohen Druckniveau beaufschlagt, liegt am Betätigungskolben im Vergleich zu einer einseitigen Druckbeaufschlagung des Betätigungskolbens ein niedrigeres Kolbenkraftniveau an.

Letztbeschriebenes Kolbenkraftniveau ist sinnvollerweise zur Verbesserung einer Qualität von Schaltungen einstellbar, bei welchen ein Stützfaktor im Bereich des Schaltelementes wesentlich geringer ist als bei wenigstens einer weiteren Schaltung, mittels der eine Übersetzung in einer Getriebevorrichtung mit erheblich erhöhtem Stützfaktor eingelegt werden soll. Das bedeutet, dass wenigstens eine Übersetzung, bei der ein hoher Stützfaktor im Bereich des Schaltelementes vorliegt, mit einem Betätigungsdruck im Bereich der zweiten Wirkfläche des Betätigungskolbens dargestellt wird, der im Wesentlichen gleich Null ist. Übersetzungen, aus welchen am Schaltelement kleinere Stützfaktoren resultieren, werden mit im Bereich der zweiten Wirkfläche des Betätigungskolbens anliegendem Betätigungsdruck dargestellt.

Nachteilhafterweise ist für die hydraulische Rückstellung eines Betätigungskolbens eines Schaltelementes jeweils eine zusätzliche Druckölzuführung vorzusehen, was insbesondere bei als Kupplungen ausgeführten Schaltelementen einen unerwünscht hohen konstruktiven Aufwand verursacht. Zusätzlich ist eine elektrohydraulische Getriebesteuerung zur Bereitstellung des an der zweiten Wirkfläche des Betätigungskolbens anzulegenden Betätigungsdruckes mit zusätzlichen Steuerelementen, wie Ventileinrichtungen und dergleichen, auszuführen, wodurch wiederum ein erhöhter Bauraumbedarf vorliegt und die Herstellkosten einer Getriebevorrichtung ansteigen.

In DE 19742644 A1, welches als nächsten Stand der Technik angesehen wird, ist eine Kupplungsvorrichtung für ein Automatgetriebe bekannt.

Aus der DE 197 00 635 C2 ist eine Kupplungsanordnung für ein Automatgetriebe bekannt, bei welcher ein Betätigungskolben eines reibschlüssigen Schaltelementes im Bereich einer ersten Wirkfläche mit einem in Schließrichtung des Schaltelementes wirkenden Betätigungsdruck beaufschlagbar ist. Im Bereich einer zweiten Wirkfläche ist der Betätigungskolben des Schaltelementes mit einem Betätigungsdruck eines zweiten ebenfalls reibschlüssigen Schaltelementes beaufschlagbar, wobei ein Kolbenraum des weiteren Schaltelementes, in dessen Bereich das weitere Schaltelement mit dem in Schließrichtung des weiteren Schaltelementes wirkenden Betätigungsdruck beaufschlagbar ist, von dem Betätigungskolben des Schaltelementes und dem Betätigungskolben des weiteren Schaltelementes begrenzt ist.

Bei der Kupplungsanordnung ist eine vorbeschriebene hydraulische Rückstellung eines Schaltelementes durch Beaufschlagen des Betätigungskolbens des Schaltelementes im Bereich seiner zweiten Wirkfläche, das heißt in Öffnungsrichtung des Schaltelementes, bzw. die Einstellung eines am Betätigungskolben des Schaltelementes angreifenden reduzierten Kolbenkraftniveaus nur mit hohem Steuer- und Regelaufwand realisierbar.

Der vorliegenden Erfindung liegt daher die Aufgabe zugrunde, eine Getriebevorrichtung und ein Verfahren zum Betreiben einer Getriebevorrichtung zur Verfügung zu stellen, mittels welchen eine gewünschte Schaltqualität auf einfache, kosten- und bauraumgünstige Art und Weise gewährleistbar ist.

Erfindungsgemäß wird diese Aufgabe mit einer Getriebevorrichtung mit den Merkmalen des Patentanspruches 1 und einem Verfahren gemäß den Merkmalen des Patentanspruches 9 gelöst.

Die erfindungsgemäße Getriebevorrichtung ist mit wenigstens einer elektrohydraulischen Getriebesteuerung und mit mehreren über fluidisch betätigbare Schaltelemente in einen Kraftfluss zu- und abschaltbarer Zahnradpaarungen ausgebildet, wobei über die Zahnradpaarungen verschiedene Übersetzungen darstellbar sind. Die Schaltelemente sind jeweils im Bereich einer ersten Wirkfläche eines Betätigungskolbens mit einem in Schließrichtung der Schaltelemente wirkenden fluidischen Betätigungsdruck beaufschlagbar. Wenigstens ein erstes Schaltelement und ein zweites Schaltelement sind derart wirkverbunden, dass wenigstens ein Betätigungskolben des ersten Schaltelementes in Abhängigkeit eines Betätigungsdruckes des zweiten Schaltelementes im Bereich einer zweiten Wirkfläche mit einem in Öffnungsrichtung des ersten Schaltelementes wirkenden fluidischen Betätigungsdruck beaufschlagbar ist.

Erfindungsgemäß ist ein von der zweiten Wirkfläche des Betätigungskolbens des ersten Schaltelementes begrenzter Kolbenraum des ersten Schaltelementes getrennt von einem von der ersten Wirkfläche des Betätigungskolbens begrenzten Kolbenraum des zweiten Schaltelementes ausgeführt und ein Betätigungsdruck führender Bereich des zweiten Schaltelementes oder ein Betätigungsdruck führender Bereich des ersten Schaltelementes mit dem von der zweiten Wirkfläche des Betätigungskolbens des ersten Schaltelementes begrenzten Kolbenraum verbunden oder verbindbar.

Bei der erfindungsgemäßen Getriebevorrichtung wird zur Rückstellung des Betätigungskolbens des ersten Schaltelementes die fluidische, d. h. vorzugsweise hydraulische, Betätigung des zweiten Schaltelementes genutzt, womit ein Bauaufwand in der Getriebevorrichtung und auch im Bereich der elektrohydraulischen Getriebesteuerung im Vergleich zu aus der Praxis bekannten Getriebevorrichtungen, bei welchen ein Betätigungskolben eines Schaltelementes über eine Rückstellfedereinrichtung mit einer in Öffnungsrichtung eines Schaltelementes wirkenden Betätigungskraft beaufschlagt ist, nur unwesentlich erhöht ist. Im Vergleich zu aus der Praxis bekannten Getriebevorrichtungen, bei welchen ein Betätigungskolben eines Schaltelementes sowohl in Öffnungs- als auch in Schließrichtung mit einem hydraulischen Betätigungsdruck beaufschlagbar ist, ist die erfindungsgemäße Getriebevorrichtung durch einen wesentlich geringeren konstruktiven Aufwand hierfür gekennzeichnet, da insbesondere im Bereich der elektrohydraulischen Getriebesteuerung keine zusätzlichen Bauteile für die Beaufschlagung des Betätigungskolbens im Bereich der zweiten Wirkfläche mit fluidischem Betätigungsdruck erforderlich ist. Darüber hinaus ist bei der erfindungsgemäßen Getriebevorrichtung auch keine weitere Druckölzuführung vorzusehen, womit der Bauaufwand im Vergleich zu aus der Praxis bekannten Lösungen reduziert ist.

Bei einer vorteilhaften Weiterbildung der erfindungsgemäßen Getriebevorrichtung ist das erste Schaltelement mit einer in Öffnungsrichtung des Schaltelementes an den Betätigungskolben angreifenden Federeinrichtung ausgebildet, womit das erste Schaltelement auch bei einem Ausfall der fluidischen Versorgung in seinen vollständig geöffneten Betriebszustand überführt wird und auf konstruktiv einfache Art und Weise eine Vorzugsstellung definiert ist.

Der Betätigungskolben des ersten Schaltelementes ist bei einer weiteren vorteilhaften Ausführungsform der Getriebevorrichtung nach der Erfindung zur Darstellung einer ersten Übersetzung, während der der Betätigungsdruck des zweiten Schaltelementes im Wesentlichen annähernd Null ist und ein Stützfaktor höher als während der Darstellung einer zweiten Übersetzung ist, zu der der Betätigungsdruck des zweiten Schaltelementes einem Schließdruckniveau des zweiten Schaltelementes entspricht, im Bereich der zweiten Wirkfläche mit einem Betätigungsdruck beaufschlagt, der wenigstens annähernd Null ist.

Damit ist auf einfache Art und Weise gewährleistet, dass das erste Schaltelement zur Darstellung der Übersetzung mit dem höheren Stützfaktor die erforderliche Übertragungsfähigkeit aufweist und während der Darstellung der Übersetzung, während der am ersten Schaltelement ein geringer Stützfaktor vorliegt, die Betätigungskraft des ersten Schaltelementes in Schließrichtung herabgesetzt ist und während Schaltungen, an welchen das erste Schaltelement beteiligt ist, durch Schwankungen des Betätigungsdruckes des ersten Schaltelementes eine Schaltqualität in geringerem Umfang beeinträchtigt wird.

Die erste Wirkfläche des Betätigungskolbens des ersten Schaltelementes ist bei einer weiteren vorteilhaften Ausführungsform der erfindungsgemäßen Getriebevorrichtung größer als die zweite Wirkfläche des Betätigungskolbens des ersten Schaltelementes und ein Betätigungsdruck führender Bereich des ersten Schaltelementes ist mit einem von der zweiten Wirkfläche des Betätigungskolbens des ersten Schaltelementes begrenzten Kolbenraum über eine in Abhängigkeit des Betätigungsdrucks des zweiten Schaltelementes betätigbare Ventileinrichtung in Wirkverbindung bringbar. Damit ist der Betätigungskolben des ersten Schaltelementes über den Betätigungsdruck des ersten Schaltelementes sowohl im Bereich seiner ersten Wirkfläche als auch im Bereich seiner zweiten Wirkfläche beaufschlagbar, wobei der Betätigungsdruck in Abhängigkeit des Betätigungsdruckes des zweiten Schaltelementes an der zweiten Wirkfläche des Betätigungskolbens des ersten Schaltelementes angelegt wird und somit wiederum während der Darstellung der Übersetzung mit dem hohen Stützfaktor im Bereich des Betätigungskolbens des ersten Schaltelementes das gewünschte hohe Kolbenkraftniveau anliegt, und während der Darstellung der Übersetzung mit dem niedrigeren Stützfaktor das für eine hohe Schaltqualität gewünschte niedrigere Kolbenkraftniveau am Betätigungskolben des ersten Schaltelementes anliegt.

Bei einer kostengünstigen, konstruktiv einfach ausgeführten und mit geringem Steuer- und Regelaufwand betreibbaren Ausführungsform der erfindungsgemäßen Getriebevorrichtung ist die Ventileinrichtung als ein in Abhängigkeit des Betätigungsdruckes des zweiten Schaltelementes umsteuerbares Umschaltventil mit einem Differenzkolben ausgebildet, an welchem der Betätigungsdruck des ersten Schaltelementes und der Betätigungsdruck des zweiten Schaltelementes anlegbar sind.

Der Betätigungskolben des ersten Schaltelementes ist bei einer weiteren vorteilhaften Ausführungsform der erfindungsgemäßen Getriebevorrichtung längsbeweglich auf einer Welle angeordnet und über wenigstens ein die Welle durchgreifendes Mitnahmeelement mit einem in der Welle längsbeweglichen angeordneten Differenzkolben wirkverbunden, der im Bereich einer Wirkfläche mit dem in Schließrichtung des ersten Schaltelementes an dem Differenzkolben angreifenden Betätigungsdruck des ersten Schaltelementes und im Bereich einer weiteren Wirkfläche mit dem in Öffnungsrichtung des ersten Schaltelementes an dem Differenzkolben angreifenden Betätigungsdruck des zweiten Schaltelementes beaufschlagbar ist, womit wiederum in Abhängigkeit des Betätigungsdruckes des zweiten Schaltelementes am Betätigungskolben des ersten Schaltelementes unterschiedliche Kolbenkraftniveaus darstellbar sind.

Das erste Schaltelement ist als form- oder reibschlüssiges Schaltelement ausbildbar.

Bei dem erfindungsgemäßen Verfahren zum Betreiben einer Getriebevorrichtung mit mehreren Schaltelementen zum Darstellen verschiedener Übersetzungen mit verschiedenen Stützfaktoren wird wenigstens eines der Schaltelemente zur Darstellung von wenigstens zwei Übersetzungen mit unterschiedlich hohen Stützfaktoren jeweils in einen Kraftfluss zu- und/oder abgeschaltet.

Erfindungsgemäß wird ein Betätigungskolben des Schaltelementes zur Darstellung der Übersetzung, während der im Bereich des Schaltelementes ein höherer Stützfaktor vorliegt, im Bereich einer ersten Wirkfläche mit einer in Schließrichtung des Schaltelementes wirkenden Betätigungskraft beaufschlagt und zur Darstellung der Übersetzung, während der im Bereich des Schaltelementes ein niedrigerer Stützfaktor vorliegt, zusätzlich im Bereich einer zweiten Wirkfläche mit einer in Öffnungsrichtung des Schaltelementes wirkenden Betätigungskraft beaufschlagt, wobei die in Öffnungsrichtung des Schaltelementes wirkende Betätigungskraft in Abhängigkeit einer in Schließrichtung wirkenden Betätigungskraft eines weiteren Schaltelementes an der zweiten Wirkfläche des Betätigungskolbens des Schaltelementes anliegt.

Durch den Einsatz des erfindungsgemäßen Verfahrens wird die Qualität von Schaltungen, an welchen das Schaltelement beteiligt ist und während welchen unterschiedlich hohe Stützfaktoren im Bereich des Schaltelementes wirken, auf einfache Art und Weise dadurch verbessert, dass im Bereich des Schaltelementes bzw. im Bereich des Betätigungskolbens des Schaltelementes in Abhängigkeit der jeweils vorliegenden Stützfaktoren unterschiedlich hohe Kolbenkraftniveaus anliegen und insbesondere bei Anliegen des niedrigeren Kolbenkraftniveaus Änderungen des in Schließrichtung des Schaltelementes wirkenden Betätigungsdruckes und auch Änderungen des in Öffnungsrichtung wirkenden Betätigungsdruckes des Schaltelementes jeweils einen geringeren Einfluss auf die Schaltqualität haben.

Weitere Vorteile und vorteilhafte Ausführungsformen des erfindungsgemäßen Gegenstandes ergeben sich aus den Patentansprüchen und den nachfolgend anhand der Zeichnung beschriebenen Ausführungsbeispielen, wobei in der Beschreibung der verschiedenen Ausführungsbeispiele zu Gunsten der Übersichtlichkeit für bau- und funktionsgleiche Bauteile dieselben Bezugszeichen verwendet werden.

Sowohl die in den Unteransprüchen angegebenen Merkmale als auch die in den nachfolgenden Ausführungsbeispielen der erfindungsgemäßen Getriebevorrichtung angegebenen Merkmale sowie der vorgeschlagenen Betriebsweisen sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Es zeigt:
- Fig. 1: ein Räderschema eines ersten Ausführungsbeispieles einer Getriebevorrichtung;
- Fig. 2: ein Schaltschema des in Fig. 1 dargestellten Räderschemas;
- Fig. 3: eine schematisierte Teillängsschnittansicht der Getriebevorrichtung gemäß Fig. 1 im Bereich eines ersten reibschlüssigen Schaltelementes;
- Fig. 4: eine Fig. 3 entsprechende Darstellung einer alternativen Ausführungsform der in Fig. 1 dargestellten Getriebevorrichtung;
- Fig. 5: eine vergrößerte Einzelansicht eines in Fig. 4 näher gekennzeichneten Bereiches V;
- Fig. 6: eine Teilansicht eines Blockschaltbildes einer elektrohydraulischen Getriebesteuerung der Getriebevorrichtung gemäß Fig. 1;
- Fig. 7: zwei Verläufe von Gang- und Kupplungsabhängigen Stützfaktoren im Bereich von zwei Schaltelementen, deren Kolbenbetätigungen in Wechselwirkung stehen;
- Fig. 8: mehrere Verläufe von Betätigungsdrücken von Schaltelementen, deren Kolbenbetätigungen in Wechselwirkung stehen;
- Fig. 9: ein Räderschema eines zweiten Ausführungsbeispieles der erfindungsgemäßen Getriebevorrichtung;
- Fig. 10: ein Schaltschema der Getriebevorrichtung gemäß Fig. 9;
- Fig. 11: ein Räderschema eines dritten Ausführungsbeispieles der erfindungsgemäßen Getriebevorrichtung;
- Fig. 12: ein Schaltschema der Getriebevorrichtung gemäß Fig. 12; und
- Fig. 13: eine Teillängsschnittansicht der Getriebevorrichtung gemäß Fig. 111 im Bereich eines formschlüssigen Schaltelementes.
- Fig. 14: eine schematisierte Teillängsschnittansicht einer Getriebevorrichtung im Bereich eines Schaltelementes;

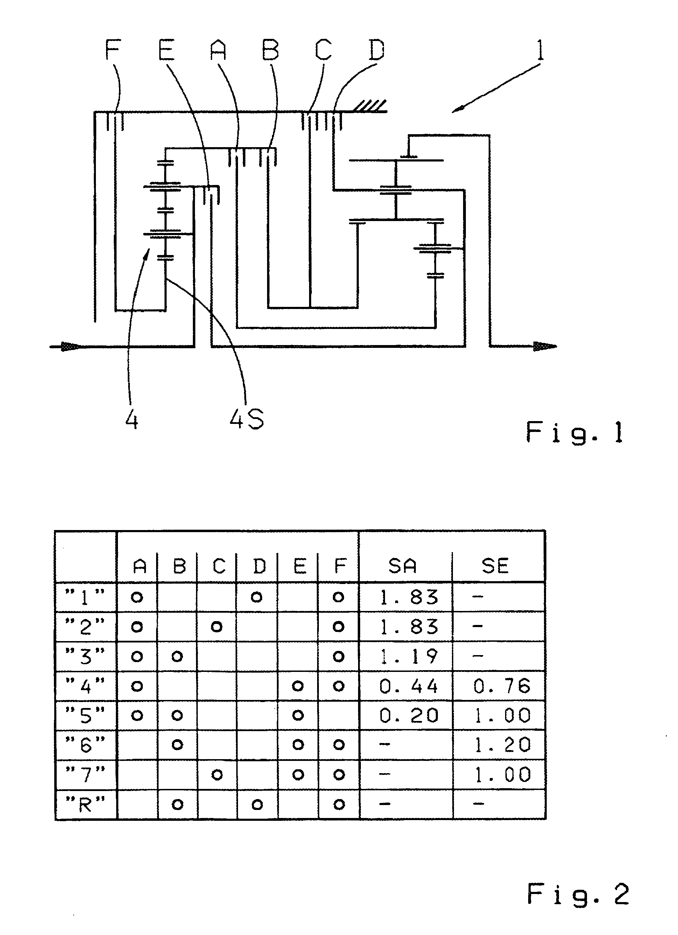

In Fig. 1 ist ein Räderschema einer ersten beispielhaften Getriebevorrichtung 1 gemäß der Erfindung gezeigt, welches als ein Sieben-Gang-Stufenautomatgetriebe auf Basis eines so genannten Lepelletier-Radsatzes mit mehreren reibschlüssigen Schaltelementen A bis F ausgebildet ist. Ein Sonnenrad 4S eines getriebeeingangsseitig angeordneten Planetenradsatzes 4 ist über das vorliegend als Anfahrbremse ausgebildete Schaltelement F festsetzbar.

In Abhängigkeit einer getriebesteuerungsseitigen Betätigung der Schaltelemente A bis F sind in der in Fig. 2 näher dargestellten Art und Weise sieben Übersetzungen "1" bis "7" für Vorwärtsfahrt und eine Übersetzung "R" für Rückwärtsfahrt darstellbar.

In der achten und der neunten Spalte des Schaltschemas gemäß Fig. 2 sind jeweils die im Bereich des Schaltelementes A in den Übersetzungen "1" bis "5" und im Bereich des Schaltelementes E in den Übersetzungen "4" bis "7" vorliegenden Stützfaktoren SA und SE aufgeführt, wobei der Stützfaktor SA des Schaltelementes A in der ersten Übersetzung "1" 1,83 beträgt und während der Darstellung der vierten Übersetzungsstufe "4" gleich 0,44 ist.

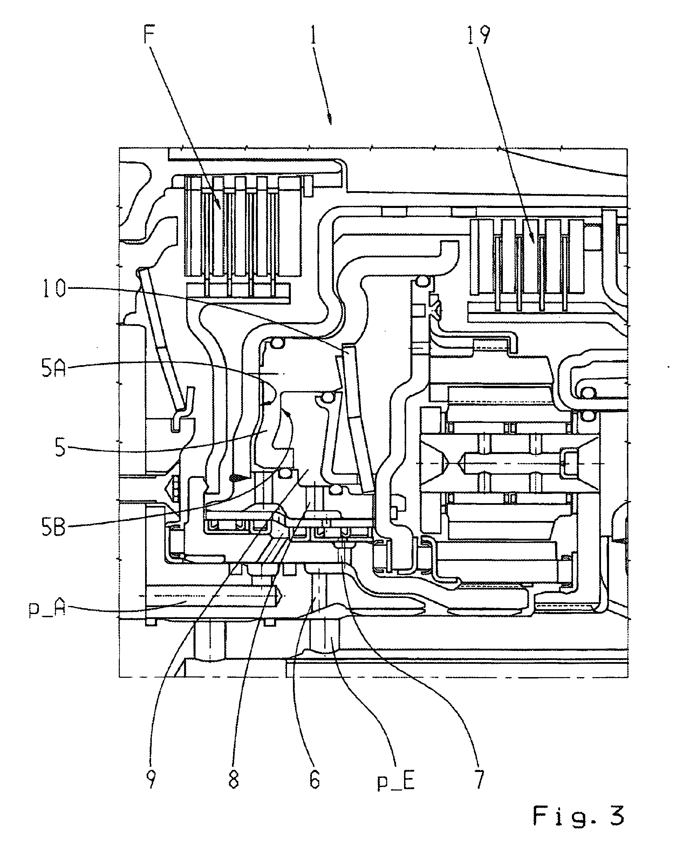

In Fig. 3 ist eine Teillängsschnittansicht der Getriebevorrichtung 1 gemäß Fig. 1 im Bereich des reibschlüssigen Schaltelementes A gezeigt, welches mit einem Betätigungskolben 5 ausgebildet ist. Der Betätigungskolben 5 ist im Bereich einer ersten Wirkfläche 5A von einem Betätigungsdruck p_A führenden Bereich mit dem in Schließrichtung des Schaltelementes A wirkenden Betätigungsdruck p_A beaufschlagbar. Im Bereich einer zweiten Wirkfläche 5B ist der Betätigungskolben 5 des Schaltelementes A mit einem Betätigungsdruck p_E des Schaltelementes E beaufschlagbar, der an dem Betätigungskolben 5 in Öffnungsrichtung des Schaltelementes A anliegt.

Das bedeutet, dass der Betätigungskolben 5 des Schaltelementes A während der eingelegten vierten Übersetzungsstufe "4" und während der Darstellung der fünften Übersetzungsstufe "5" im Bereich der ersten Wirkfläche 5A mit dem Betätigungsdruck p_A und im Bereich der zweiten Wirkfläche 5B mit dem Betätigungsdruck p_E des Schaltelementes E beaufschlagt ist, während der Betätigungskolben 5 des Schaltelementes A während der Darstellung der ersten drei Übersetzungsstufen "1" bis "3" für Vorwärtsfahrt lediglich im Bereich der ersten Wirkfläche 5A mit dem Betätigungsdruck p_A des Schaltelementes A beaufschlagt wird und am Betätigungskolben 5 ein höheres Kolbenkraftniveau in Schließrichtung des Schaltelementes A anliegt als während der Darstellung der vierten und fünften Übersetzungsstufe "4" und "5".

Mit dieser Vorgehensweise wird gewährleistet, dass das Schaltelement A während der Darstellung der Übersetzungsstufen "1" bis "3", die jeweils durch einen höheren Stützfaktor SA im Bereich des Schaltelementes A gekennzeichnet sind als die vierte Übersetzungsstufe "4" und die fünfte Übersetzungsstufe "5", mit der zur Darstellung der Übersetzungsstufen "1" bis "3" erforderlichen Übertragungsfähigkeit vorliegt.

Während der Darstellung der vierten Übersetzungsstufe "4" und der fünften Übersetzungsstufe "5" sind die Stützfaktoren SA im Bereich des Schaltelementes A wesentlich geringer und der Betätigungskolben 5 wird aufgrund der zusätzlichen Beaufschlagung des Betätigungskolbens 5 im Bereich der zweiten Wirkfläche 5B mit dem Betätigungsdruck p_E des Schaltelementes E mit einem in Schließrichtung des Schaltelementes A wirkenden geringeren Kolbenkraftniveau beaufschlagt.

Der Betätigungsdruck p_E führende Bereich der Getriebevorrichtung 1 gemäß Fig. 3 ist vorliegend über Bohrungen 6, 7 und 8 mit einem von der zweiten Wirkfläche 5B begrenzten Kolbenraum 9 des Schaltelementes A verbunden.

Die erste Wirkfläche 5A des Betätigungskolbens 5 ist vorliegend größer als die zweite Wirkfläche 5B des Betätigungskolbens 5 des Schaltelementes A womit bei Druckgleichheit der Betätigungsdrücke p_A und p_E der Schaltelemente A und E das Schaltelement A bei im Bereich der zweiten Wirkfläche 5B anlegendem Betätigungsdruck p_E des Schaltelementes E nicht geöffnet wird. Das Schaltelement A wird auch während der Darstellung der vierten Übersetzungsstufe "4" und der fünften Übersetzungsstufe "5" durch die ebenfalls in Öffnungsrichtung des Schaltelementes A am Betätigungskolben 5 angreifende Rückstellfedereinrichtung 10 nicht in seinen geöffneten Betriebszustand überführt.

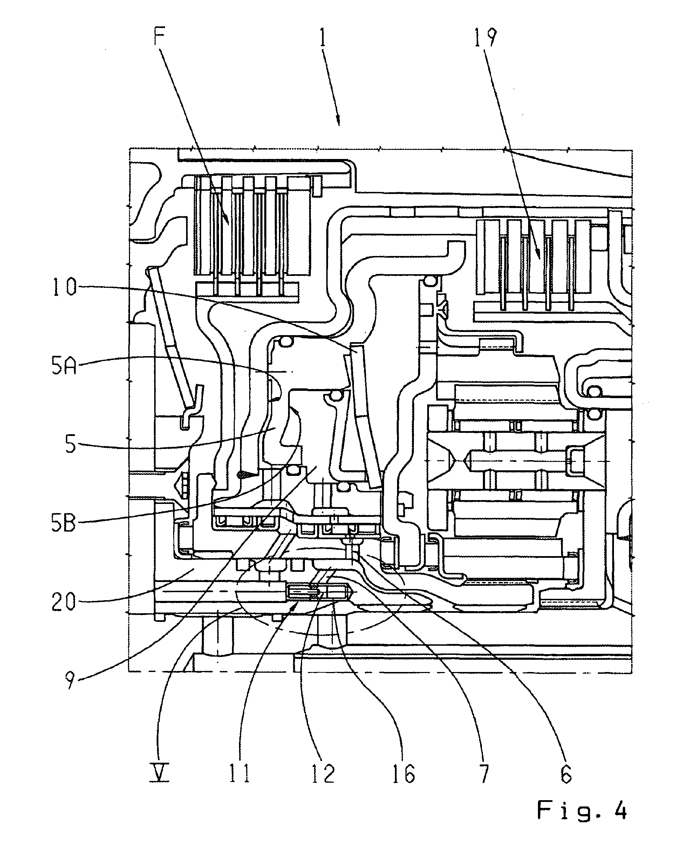

Fig. 4 zeigt eine Fig. 3 entsprechende Darstellung eines zweiten Ausführungsbeispieles der Getriebevorrichtung 1 gemäß Fig. 1, bei welchem eine als Umschaltventil ausgebildete Ventileinrichtung 11 vorgesehen ist, über welche der Betätigungsdruck p_A führende Bereich der Getriebevorrichtung 1 in Abhängigkeit des Betätigungsdruckes p_E des Schaltelementes E mit dem Kolbenraum 9 des Schaltelementes A in der nachbeschriebenen Art und Weise während der Darstellung der vierten Übersetzungsstufe "4" und der fünften Übersetzungsstufe "5" in Wirkverbindung bringbar ist.

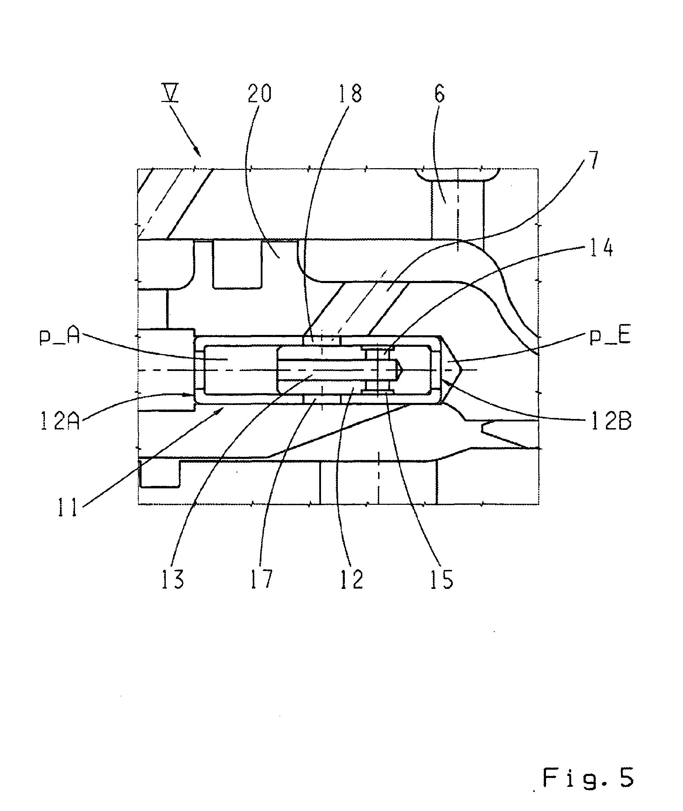

Fig. 5 zeigt eine vergrößerte Ansicht eines in Fig. 4 näher gekennzeichneten Bereichs V, der die Ventileinrichtung 11 umfasst. Die Ventileinrichtung 11 ist mit einem Kolbenelement 12 ausgebildet, wobei an dessen Stirnseite 12A der Betätigungsdruck p_A des Schaltelementes A und an der gegenüberliegenden Stirnseite 12B der Betätigungsdruck p_E anliegt. Im in Fig. 5 dargestellten Ausführungsbeispiel der Ventileinrichtung 12 sind die Stirnseiten 12A und 12B gleich groß. In Abhängigkeit der aus den Betätigungsdrücken p_A und p_E resultierenden und am Kolbenelement angreifenden Gesamtkraftkomponente wird das Kolbenelement 12 aus der in Fig. 5 dargestellten Stellung, in der der Betätigungsdruck p_A führende Bereich vom Kolbenraum 9 des Schaltelementes A getrennt ist, in eine zweite Schaltstellung verfahren, in der der Betätigungsdruck p_A führende Bereich der Getriebevorrichtung 1 mit dem Kolbenraum 9 des Schaltelementes A verbunden ist.

Hierfür ist das Kolbenelement 12 mit einer in axialer Richtung verlaufenden Sacklochbohrung 13 ausgeführt, die im Endbereich mit die Wandung des Kolbenelementes 12 durchgreifenden Querbohrungen 14, 15 verbunden ist. Das Kolbenelement 12 ist vorliegend in einer Hülse 16 vormontiert, die wiederum mit Querbohrungen 17, 18 versehen ist. Die Hülse 16 wird gemeinsam mit dem Kolbenelement 12 in ein vorliegend eine Nabe darstellendes Bauteil 20 der Getriebevorrichtung 1 eingepresst. In der zweiten Schaltstellung des Kolbenelementes 12 gemäß Fig. 4 sind die Querbohrungen 14 und 15 in Deckung mit den Querbohrungen 17 und 18 der Hülse 16, womit der Betätigungsdruck p_A führende Bereich der Getriebevorrichtung 1 mit dem Kolbenraum 9 während der Darstellung der vierten Übersetzungsstufe "4" oder der fünften Übersetzungsstufe "5" in Verbindung steht.

Da die erste Wirkfläche 5A größer als die zweite Wirkfläche 5B des Betätigungskolbens 5 des Schaltelementes A ist, wird der Betätigungskolben 5 bei geschaltetem Schaltelement E mit dem Betätigungsdruck p_E des Schaltelementes E im Bereich der zweiten Wirkfläche 5B beaufschlagt, womit in der vierten Übersetzungsstufe "4" und der fünften Übersetzungsstufe "5" die auf ein Lamellenpaket 19 des Schaltelementes A wirkende Kraft im Vergleich zu einem abgeschalteten Zustand des Schaltelementes E bei niedrigeren Stützfaktoren im Bereich des Schaltelementes A reduziert ist.

Die Druckölzuführung ausgehend vom Betätigungsdruck p_A führenden Bereich der Getriebevorrichtung 1 zum Kolbenraum 9 wird im Bereich der Ventileinrichtung 11 wieder unterbrochen, wenn das Schaltelement E durch Absenken des Betätigungsdruckes p_E abgeschaltet wird.

Neben der vorbeschriebenen Reduzierung der in Schließrichtung an dem Betätigungskolben 5 angreifenden Betätigungskraft des Schaltelementes A besteht auch die Möglichkeit, das Abschalten des Schaltelementes A durch Beaufschlagen des Betätigungskolbens 5 im Bereich der zweiten Wirkfläche 5B mit dem Betätigungsdruck p_E des Schaltelementes E zu realisieren, wobei dies mit Rücknahme des Schaltdrucks p_A auf der größeren Kolbenfläche bzw. im Bereich der ersten Wirkfläche 5A des Betätigungskolbens 5 möglich wird.

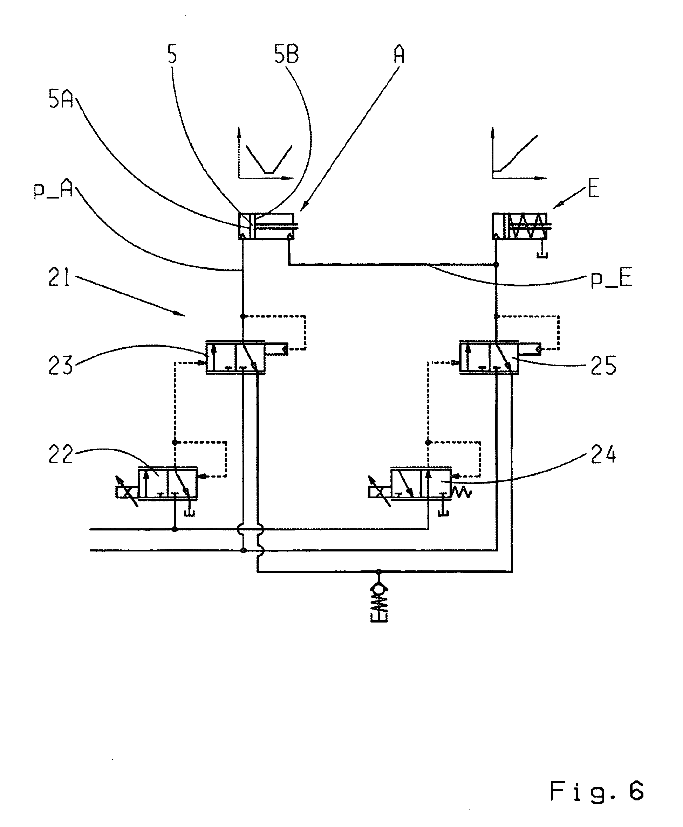

Fig. 6 zeigt einen Ausschnitt eines Blockschaltbildes einer elektrohydraulischen Getriebesteuerung 21 der Getriebevorrichtung 1 gemäß Fig. 1, bei welcher der Betätigungsdruck p_A des Schaltelementes A über diesem zugeordnete Ventileinrichtungen 22 und 23 eingestellt wird, während der im Kolbenraum 9 des Schaltelementes A wirkende Betätigungsdruck dem Betätigungsdruck p_E des Schaltelementes E entspricht, der wiederum über dem Schaltelement E zugeordnete Ventileinrichtungen 24, 25 eingestellt wird.

Über die elektrohydraulische Getriebesteuerung 21 werden die Schaltelemente A und E derart betätigt, dass der Betätigungsdruck des Schaltelementes A während eines Notlaufbetriebes im Wesentlichen auf Null abfällt, während der Betätigungsdruck p_E des Schaltelementes E auf den maximalen Systemdruck der Getriebevorrichtung 1 ansteigt. Diese Vorgehensweise gewährleistet, dass die Schaltelemente A und E während eines Notlaufbetriebes der Getriebevorrichtung 1 nicht gleichzeitig geschaltet werden.

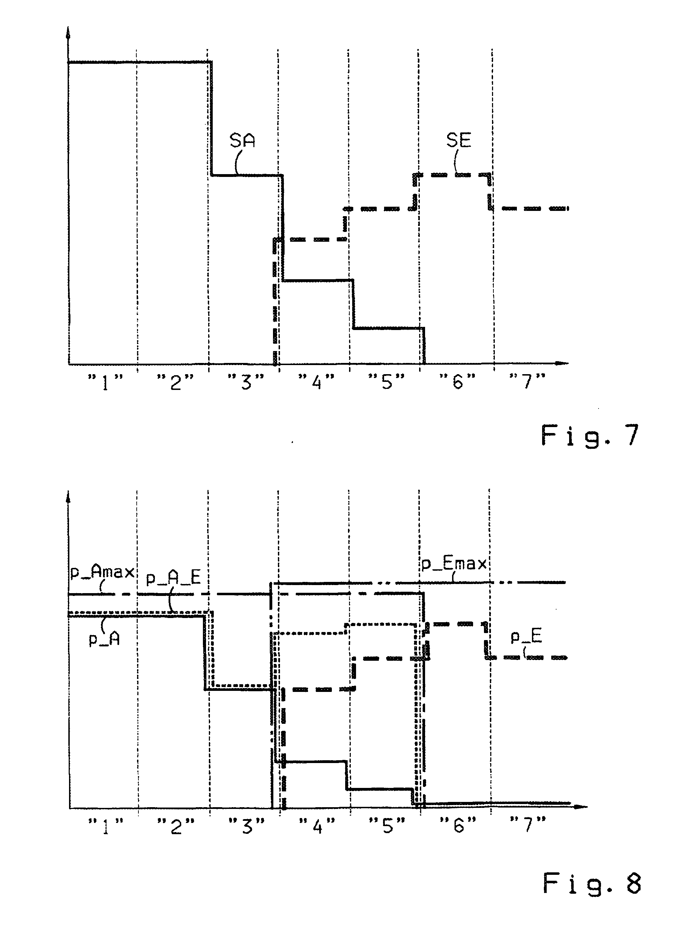

Die Verläufe der Stützfaktoren SA und SE der Schaltelemente A und E sind in Fig. 7 über den Übersetzungsstufen "1" bis "7" für Vorwärtsfahrt gezeigt, während Fig. 8 die damit jeweils korrespondierenden gangabhängigen Betätigungsdrücke p_A und p_E der Schaltelemente A und E darstellt. Dabei ist der Verlauf des Betätigungsdruckes p_A des Schaltelementes A, der zur Darstellung der vollen Übertragungsfähigkeit des Schaltelementes A einzustellen ist, als durchgezogene Linie in Fig. 8 graphisch wiedergegeben, während der Betätigungsdruck p_E, welcher zur Darstellung der vollen Übertragungsfähigkeit des Schaltelementes E jeweils einzustellen ist, durch die gestrichelte Linie graphisch wiedergegeben ist.

Ein jeweils maximal darstellbarer Betätigungsdruck p_Amax bzw. p_Emax des Schaltelementes A bzw. des Schaltelementes E ist jeweils durch die einpunkt-strichliert ausgeführte Linie bzw. durch die zweipunkt-strichliert ausgeführte Linie in Fig. 8 graphisch wiedergegeben. Zusätzlich ist ein Verlauf des zur Darstellung der vollen Übertragungsfähigkeit des Schaltelementes A erforderlichen Druckes p_A_E durch eine gepunktete Linie graphisch wiedergegeben, der im Bereich der ersten Wirkfläche 5A am Betätigungskolben 5 anzulegen ist, wenn der Betätigungskolben 5 im Bereich der zweiten Wirkfläche 5 mit dem Betätigungsdruck p_E des Schaltelementes E bei gleichgroßen Wirkflächen 5A und 5B des Betätigungskolbens 5 beaufschlagt wird, wobei der Verlauf p_A_E der Summe aus den Druckverläufen der Betätigungsdrücke p_A und p_E in den Übersetzungsstufen "1" bis "5" entspricht.

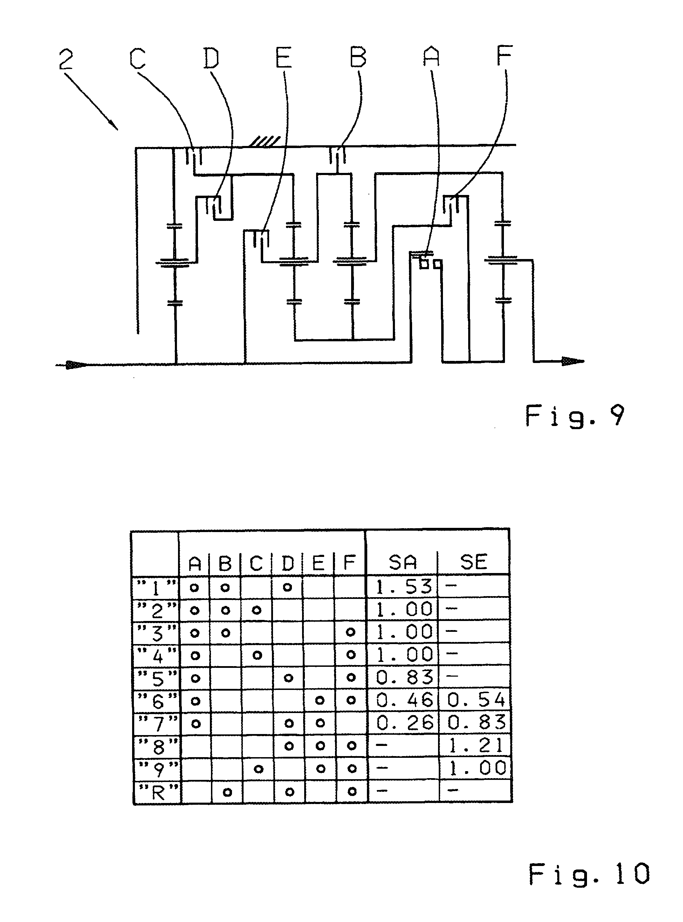

Ein Räderschema einer als Neun-Gang-Stufenautomatgetriebe ausgebildeten zweiten beispielhaften Getriebevorrichtung 2 gemäß der Erfindung ist in Fig. 9 gezeigt, bei welchem das Schaltelement A als formschlüssiges Schaltelement ausgebildet ist. In Abhängigkeit der in Fig. 10 näher gezeigten Schaltlogik sind über die Getriebevorrichtung 1 gemäß Fig. 9 neun Übersetzungsstufen "1" bis "9" für Vorwärtsfahrt und eine Übersetzungsstufe "R" für Rückwärtsfahrt darstellbar. Zur Darstellung der ersten sieben Übersetzungsstufen "1" bis "7" ist das Klauenschaltelement bzw. das Schaltelement A jeweils zugeschaltet, wobei zur Darstellung der sechsten Übersetzungsstufe "6" und der siebten Übersetzungsstufe "7" gleichzeitig das als reibschlüssiges Schaltelement ausgeführte Schaltelement E in den Kraftfluss der Getriebevorrichtung 2 zugeschaltet wird. Der Stützfaktor SA im Bereich des Schaltelementes A ist während der Darstellung der sechsten bzw. der siebten Übersetzungsstufe "6" bzw. "7" erheblich geringer als bei den eingelegten Übersetzungsstufen "1" bis "5". Aus dieser Schaltlogik ist ersichtlich, dass die für das erste Ausführungsbeispiel erläuterte Ansteuerung sinngemäß auf für das Getriebe dieses zweiten Ausführungsbeispiels anwendbar sind.

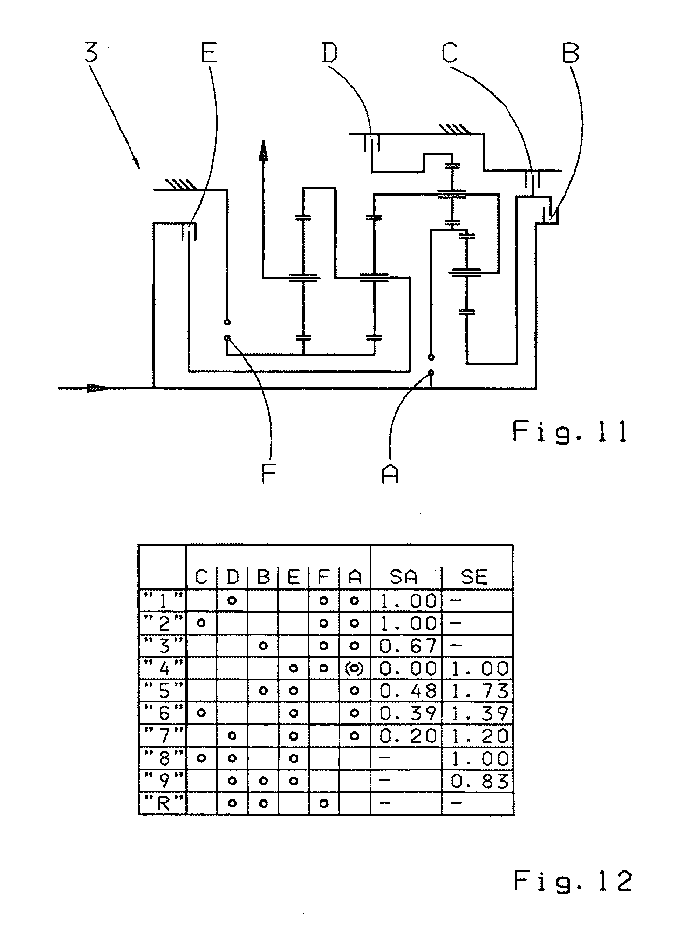

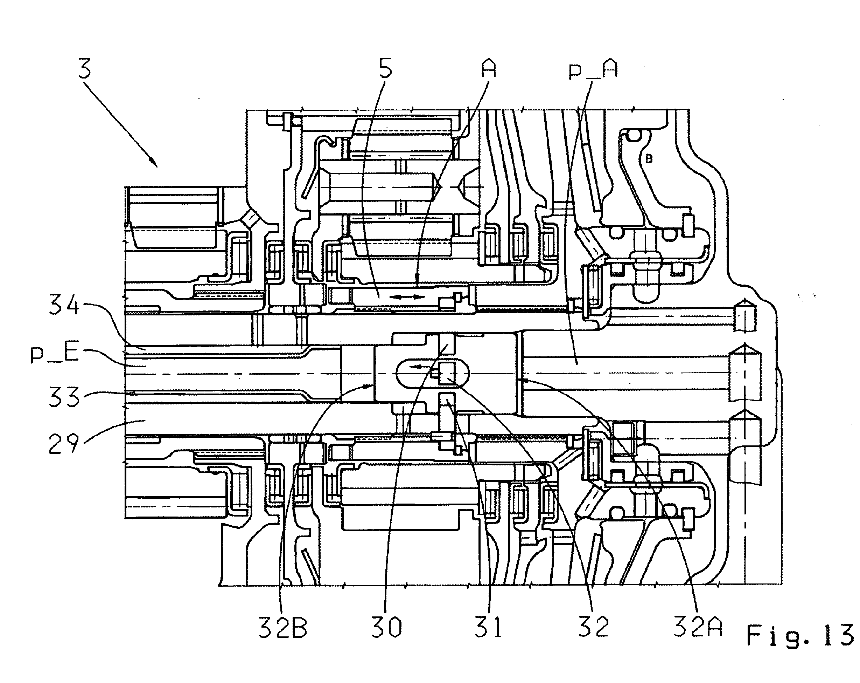

Ein Räderschema eines dritten Ausführungsbeispieles einer erfindungsgemäßen Getriebevorrichtung 3 zeigt Fig. 11, bei welchem das Schaltelement A und das Schaltelement F jeweils als formschlüssige Schaltelemente ausgebildet sind, während die Schaltelemente B, C, D und E jeweils als reibschlüssige Schaltelemente ausgeführt sind. Eine Schaltlogik dieser Getriebevorrichtung 3 gemäß Fig. 11 zeigt Fig. 12, wobei in Abhängigkeit der Betätigung der Schaltelemente A bis F jeweils wiederum neun Übersetzungsstufen "1" bis "9" für Vorwärtsfahrt und eine Übersetzungsstufe "R" für Rückwärtsfahrt darstellbar sind. Aus dieser Schaltlogik ist ersichtlich, dass auch für das dritte Getriebeausführungsbeispiel die Ansteuerung der Schaltelemente A und E des zuvor erläuterten ersten Ausführungsbeispiels sinngemäß Verwendung finden können. In Fig. 13 ist ein Teillängsschnitt für eine entsprechende beispielhafte Konstruktion dargestellt.

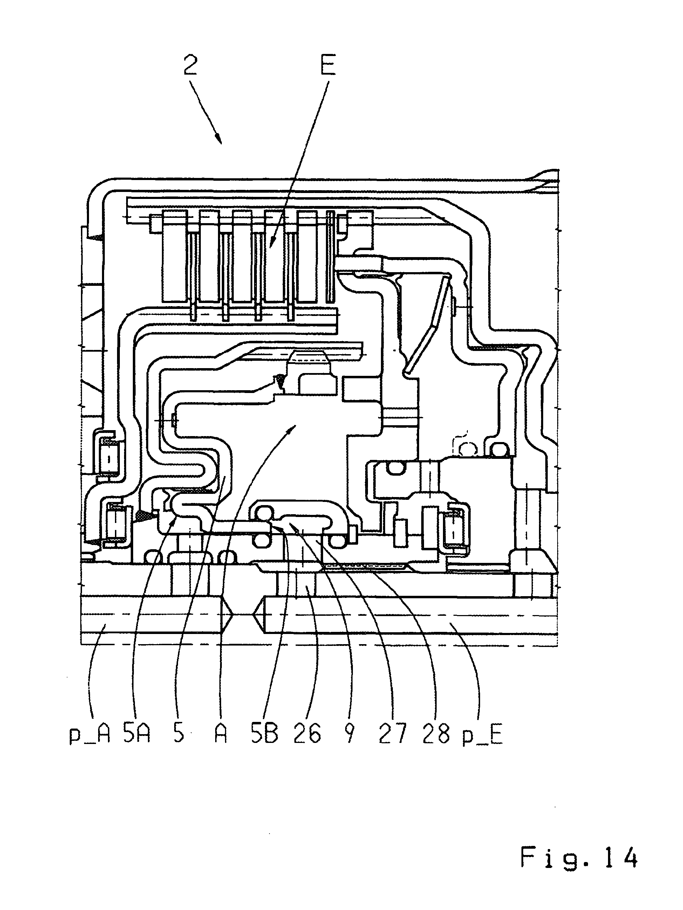

Der Betätigungskolben 5 des Schaltelementes A ist in der in Fig. 14 dargestellten Art und Weise längsbeweglich auf einer Welle 29 der Getriebevorrichtung 1 gemäß Fig. 12 angeordnet und über die Welle 29 durchgreifende Mitnahmeelemente 30, 31 mit einem wiederum in der Welle 29 längsbeweglich angeordneten Differenzkolben 32 wirkverbunden.

Zum Schließen des Schaltelementes A wird der Differenzkolben 32 im Bereich seiner größeren ersten Wirkfläche 32A mit dem Betätigungsdruck p_A des Schaltelementes A beaufschlagt. Während der Darstellung der vierten bis neunten Übersetzungsstufe "4" bis "9" wird der Differenzkolben 32 im Bereich seiner kleineren zweiten Wirkfläche 32B mit dem Betätigungsdruck p_E des Schaltelementes E beaufschlagt und eine am Differenzkolben 32 angreifende Gesamtkraftkomponente im Vergleich zu der während der Darstellung der ersten Übersetzungsstufe "1" bis dritten Übersetzungsstufe "3" angreifenden Gesamtkraftkomponente herabgesetzt.

Der den Betätigungsdruck p_E des Schaltelementes E führende Bereich der Getriebevorrichtung 1 ist vorliegend über ein Hülsenelement 33 von einem Schmierdruck führenden Bereich 34 innerhalb der Welle 29 getrennt.

Sinkt der an der größeren ersten Wirkfläche 32A anliegende Betätigungsdruck p_A des Schaltelementes A ab, wird der Differenzkolben 32 vom Betätigungsdruck p_E des Schaltelementes E in einem das Schaltelement A öffnenden Umfang umgeschoben, was bei einer Umschaltung von der siebten Übersetzungsstufe "7" in die achte Übersetzungsstufe "8" stattfindet.

Fig. 14 schließlich zeigt ein weiteres Beispiel für eine konstruktive Ausgestaltung eines formschlüssigen Schaltelementes A, welches räumlich gesehen benachbart zu einem reibschlüssigen Schaltelement E angeordnet ist, wobei die Druckansteuerung dieser beiden Schaltelemente A, E die gleichen Merkmale aufweist, wie die Druckansteuerung der Getriebevorrichtung 1 gemäß dem ersten erfindungsgemäßen Ausführungsbeispiels.

Wie in Fig. 14 ersichtlich, ist der Den Betätigungsdruck p_E des Schaltelementes E führende Bereich der Getriebevorrichtung 2 über zwei Bohrungen 26 und 27 mit dem Kolbenraum 9 des ersten Schaltelementes A verbunden, wobei eine Mitnahmeverzahnung 28 mit einer die Verbindung zwischen dem Kolbenraum 9 des Schaltelementes A und dem Betätigungsdruck p_E des Schaltelementes E miteinander verbindenden Bereich abdichtenden Passung ausgeführt ist. Alternativ hierzu ist vor oder nach der Mitnahmeverzahnung auch ein O-Ring oder eine andere Dichteinrichtung vorsehbar, um die hydraulische Verbindung zwischen dem Kolbenraum 9 und dem Betätigungsdruck p_E führenden Bereich der Getriebevorrichtung 2 im erforderlichen Umfang abzudichten.

Bei einer weiteren vorteilhaften Ausführungsform der Getriebevorrichtung nach der Erfindung sind die zwei zur Verbesserung der Schaltqualität angestrebten Kolbenkraftniveaus bei entsprechender Schaltlogik auf analoge Weise mittels eines so genannten Additionskolbens realisierbar, wobei das erste Schaltelement bei der Ausführung des Betätigungskolbens als Additionskolben mit einer Rückstellfedereinrichtung zum Führen des ersten Schaltelementes in seinen geöffneten Betriebszustand auszubilden ist.

Die vorbeschriebene Vorgehensweise bietet mit niedrigem Bauaufwand die Qualität von Schaltungen mit unterschiedlich hohen Stützfaktoren in den verschiedenen zu- bzw. abzuschaltenden Übersetzungsstufen zu verbessern.

### Bezugszeichen

- 1, 2, 3: Getriebevorrichtung
- 4S: Sonnenrad
- 4: Planetenradsatz
- 5: Betätigungskolben
- 5A: erste Wirkfläche
- 5B: zweite Wirkfläche
- 6 bis 8: Bohrung
- 9: Kolbenraum
- 10: Rückstellfedereinrichtung
- 11: Ventileinrichtung
- 12: Kolbenelement
- 12A, 12B: Stirnseite
- 13: Sacklochbohrung des Kolbenelementes
- 14, 15: Querbohrung
- 16: Hülse
- 17, 18: Querbohrung
- 19: Lamellenpaket
- 20: Nabe
- 21: elektrohydraulische Getriebesteuerung
- 22 bis 25: Ventileinrichtung
- 26, 27: Bohrung
- 28: Mitnahmeverzahnung
- 29: Welle
- 30, 31: Mitnahmeelement
- 32: Differenzkolben
- 32A: erste Wirkfläche
- 32B: zweite Wirkfläche
- 33: Hülsenelement
- 34: Schmierdruck führender Bereich

## Patentansprüche

1. Getriebevorrichtung (1, 2, 3) mit wenigstens einer elektrohydraulischen Getriebesteuerung (21) und mit mehreren über fluidisch betätigbare Schaltelemente (A bis E) in einen Kraftfluss zu- und abschaltbare Zahnradpaarungen, über welche verschiedene Übersetzungen ("1" bis "9", "R") darstellbar sind, wobei die Schaltelemente (A bis F) jeweils im Bereich einer ersten Wirkfläche (5A, 32A) eines Betätigungskolbens (5) mit einem in Schließrichtung der Schaltelemente (A) wirkenden fluidischen Betätigungsdruck (p_A) beaufschlagbar sind und wenigstens ein erstes Schaltelement (A) und ein zweites Schaltelement (E) derart wirkverbunden sind, **dadurch gekennzeichnet, dass** wenigstens ein Betätigungskolben (5) des ersten Schaltelementes (A) in Abhängigkeit eines Betätigungsdruckes (p_E) des zweiten Schaltelementes (E) im Bereich einer zweiten Wirkfläche (5B, 32B) mit einem in Öffnungsrichtung des ersten Schaltelementes (A) wirkenden fluidischen Betätigungsdruck (p_A; p_E) beaufschlagbar ist, dass ein von der zweiten Wirkfläche (5B, 32B) des Betätigungskolbens (5) des ersten Schaltelementes (A) begrenzter Kolbenraum (9) des ersten Schaltelementes (A) getrennt von einem von der ersten Wirkfläche (5A, 32 A) des Betätigungskolbens begrenzten Kolbenraum des zweiten Schaltelementes (E) ausgeführt ist und ein Betätigungsdruck (p_E) führender Bereich des zweiten Schaltelementes (E) oder ein Betätigungsdruck (p_A) führender Bereich des ersten Schaltelementes (A) mit dem von der zweiten Wirkfläche (5B) des Betätigungskolbens (5) des ersten Schaltelementes (A) begrenzten Kolbenraum (9) verbunden ist oder verbindbar ist.

2. Getriebevorrichtung nach Anspruch 1, **dadurch gekennzeichnet, dass** das erste Schaltelement (A) mit einer in Öffnungsrichtung des ersten Schaltelementes (A) an dem Betätigungskolben (5) angreifenden Rückstellfedereinrichtung (10) ausgebildet ist.

3. Getriebevorrichtung nach Anspruch 1 oder 2, **dadurch gekennzeichnet, dass** der Betätigungskolben (5) des ersten Schaltelementes (A) zur Darstellung einer ersten Übersetzung ("1"), während der der Betätigungsdruck (p_E) des zweiten Schaltelementes (E) im Wesentlichen wenigstens annähernd Null ist und ein Stützfaktor (SA) höher ist als während der Darstellung einer zweiten Übersetzung ("4", "6"), zu der der Betätigungsdruck (p_E) des zweiten Schaltelementes (E) einem Schließdruckniveau des zweiten Schaltelementes (E) entspricht, im Bereich der zweiten Wirkfläche (5B, 32B) mit einem Betätigungsdruck beaufschlagbar ist, der wenigstens annähernd Null ist.

4. Getriebevorrichtung nach einem der Ansprüche 1 bis 3, **dadurch gekennzeichnet, dass** die erste Wirkfläche (5A, 32A) des Betätigungskolbens (5) des ersten Schaltelementes (A) größer als die zweite Wirkfläche (5B, 32B) des Betätigungskolbens (5) des ersten Schaltelementes (A) ist und ein Betätigungsdruck (p_A) führender Bereich des ersten Schaltelementes (A) mit dem von der zweiten Wirkfläche (5B, 32B) des Betätigungskolbens (5) des ersten Schaltelementes (A) begrenzten Kolbenraum (9) über eine in Abhängigkeit des Betätigungsdrucks (p_E) des zweiten Schaltelementes (E) betätigbare Ventileinrichtung (11) in Wirkverbindung bringbar ist.

5. Getriebevorrichtung nach Anspruch 4, **dadurch gekennzeichnet, dass** die Ventileinrichtung (11) als ein in Abhängigkeit des Betätigungsdruckes (p_E) des zweiten Schaltelementes (E) umsteuerbares Umschaltventil mit einem Kolbenelement (12) ausgeführt ist, an welchem der Betätigungsdruck (p_A) des ersten Schaltelementes (A) und der Betätigungsdruck (p_E) des zweiten Schaltelementes (E) anlegbar sind.

6. Getriebevorrichtung nach einem der Ansprüche 1 bis 5, **dadurch gekennzeichnet, dass** der Betätigungskolben (5) des ersten Schaltelementes (A) längsbeweglich auf einer Welle (29) angeordnet ist und über wenigstens ein die Welle (29) durchgreifendes Mitnahmeelement (30, 31) mit einem in der Welle (29) längsbeweglich angeordneten Differenzkolben (32) wirkverbunden ist, der im Bereich einer Wirkfläche (32A) mit dem in Schließrichtung des ersten Schaltelementes (A) an dem Differenzkolben (32) angreifenden Betätigungsdruck (p_A) des ersten Schaltelementes (A) und im Bereich einer weiteren Wirkfläche (32B) mit dem in Öffnungsrichtung des ersten Schaltelementes (A) an dem Differenzkolben (32) angreifenden Betätigungsdruck (p_E) des zweiten Schaltelementes (E) beaufschlagbar ist.

7. Getriebevorrichtung nach einem der Ansprüche 1 bis 6, **dadurch gekennzeichnet, dass** der Betätigungsdruck (p_A) des ersten Schaltelementes (A) während eines Notlaufbetriebes mittels der Getriebesteuerung (21) im Wesentlichen auf Null einstellbar ist, während der Betätigungsdruck (p_E) des zweiten Schaltelementes (E) über die Getriebesteuerung (21) auf den maximalen Systemdruck anhebbar ist.

8. Getriebevorrichtung nach einem der Ansprüche 1 bis 7, **dadurch gekennzeichnet, dass** das erste Schaltelement (A) als form- oder reibschlüssiges Schaltelement ausgebildet ist.

9. Verfahren zum Betreiben einer Getriebevorrichtung (1), insbesondere einer Getriebevorrichtung gemäß einem der Ansprüche 1 bis 8, mit mehreren Schaltelementen (A bis F) zum Darstellen verschiedener Übersetzungen ("1" bis "9", "R") mit verschiedenen Stützfaktoren, wobei wenigstens eines der Schaltelemente (A, E) zur Darstellung von wenigstens zwei Übersetzungen mit unterschiedlich hohen Stützfaktoren in einen Kraftfluss zu- und/oder abzuschalten ist, **dadurch gekennzeichnet, dass** ein Betätigungskolben (5) eines ersten Schaltelementes (A) zur Darstellung einer ersten Übersetzung ("1"), während der im Bereich des Schaltelementes (A) ein höherer Stützfaktor vorliegt, im Bereich einer ersten Wirkfläche (5A, 32A) mit einer in Schließrichtung des ersten Schaltelementes (A) wirkenden Betätigungskraft beaufschlagt wird und zur Darstellung einer anderen Übersetzung ("4", "6"), während der im Bereich des ersten Schaltelementes (A) ein niedrigerer Stützfaktor vorliegt, zusätzlich im Bereich einer zweiten Wirkfläche (5B, 32B) mit einer in Öffnungsrichtung des ersten Schaltelementes (A) wirkenden Betätigungskraft beaufschlagt wird, wobei die in Öffnungsrichtung des ersten Schaltelementes (A) wirkende Betätigungskraft in Abhängigkeit der in Schließrichtung wirkenden Betätigungskraft eines zweiten Schaltelementes (E) an der zweiten Wirkfläche (5B, 32B) des Betätigungskolbens (5) des Schaltelementes (A) anliegt.

## Claims

1. Transmission device (1, 2, 3) having at least one electrohydraulic transmission controller (21) and having multiple gearwheel pairs which can be connected into and disconnected from a power flow by means of fluidically actuable shift elements (A to E), by means of which gearwheel pairs different transmission ratios ("1" to "9", "R") can be realized, wherein the shift elements (A to F) can be acted on, in each case in the region of a first active surface (5A, 32A) of an actuating piston (5), with a fluidic actuation pressure (p_A) acting in a closing direction of the shift elements (A), and at least one first shift element (A) and one second shift element (E) are operatively connected, **characterized in that** at least one actuating piston (5) of the first shift element (A) can, as a function of an actuation pressure (p_E) of the second shift element (E), be acted on in the region of a second active surface (5B, 32B) with a fluidic actuation pressure (p_A; p_E) acting in an opening direction of the first shift element (A), **in that** a piston chamber (9), which is delimited by the second active surface (5B, 32B) of the actuating piston (5) of the first shift element (A), of the first shift element (A) is formed separately from a piston chamber, which is delimited by the first active surface (5A, 32A) of the actuating piston, of the second shift element (E), and a region, which carries actuation pressure (p_E), of the second shift element (E), or a region, which carries actuation pressure (p_A), of the first shift element (A) is or can be connected to the piston chamber (9) which is delimited by the second active surface (5B) of the actuating piston (5) of the first shift element (A).

2. Transmission device according to Claim 1, **characterized in that** the first shift element (A) is formed with a restoring spring device (10) which engages, in an opening direction of the first shift element (A), on the actuating piston (5).

3. Transmission device according to Claim 1 or 2, **characterized in that** the actuating piston (5) of the first shift element (A) can be acted on in the region of the second active surface (5B, 32B) with an actuation pressure which is at least approximately zero in order to realize a first transmission ratio ("1"), in the presence of which the actuation pressure (p_E) of the second shift element (E) is substantially at least approximately zero and a support factor (SA) is higher than during the realization of a second transmission ratio ("4", "6"), in the presence of which the actuation pressure (p_E) of the second shift element (E) corresponds to a closing pressure level of the second shift element (E).

4. Transmission device according to one of Claims 1 to 3, **characterized in that** the first active surface (5A, 32A) of the actuating piston (5) of the first shift element (A) is larger than the second active surface (5B, 32B) of the actuating piston (5) of the first shift element (A), and a region, which carries actuation pressure (p_A), of the first shift element (A) can be placed in operative connection with the piston chamber (9), which is delimited by the second active surface (5B, 32B) of the actuating piston (5) of the first shift element (A), by means of a valve device (11) which can be actuated as a function of the actuation pressure (p_E) of the second shift element (E).

5. Transmission device according to Claim 4, **characterized in that** the valve device (11) is in the form of a switchover valve which can be switched over as a function of the actuation pressure (p_E) of the second shift element (E) and which has a piston element (12) to which the actuation pressure (p_A) of the first shift element (A) and the actuation pressure (p_E) of the second shift element (E) can be applied.

6. Transmission device according to one of Claims 1 to 5, **characterized in that** the actuating piston (5) of the first shift element (A) is arranged in a longitudinally movable manner on a shaft (29) and is operatively connected, via at least one driving element (30, 31) which extends through the shaft (29), to a differential piston (32) which is arranged in a longitudinally movable manner in the shaft (29), which differential piston can be acted on in the region of an active surface (32A) with the actuation pressure (p_A), acting on the differential piston (32) in the closing direction of the first shift element (A), of the first shift element (A), and can be acted on in the region of a further active surface (32B) with the actuation pressure (p_E), acting on the differential piston (32) in the opening direction of the first shift element (A), of the second shift element (E).

7. Transmission device according to one of Claims 1 to 6, **characterized in that** the actuation pressure (p_A) of the first shift element (A) can be set substantially to zero by means of the transmission controller (21) during emergency running operation, while the actuation pressure (p_E) of the second shift element (E) can be raised to the maximum system pressure by means of the transmission controller (21).

8. Transmission device according to one of Claims 1 to 7, **characterized in that** the first shift element (A) is in the form of a positively locking or frictionally locking shift element.

9. Method for operating a transmission device (1), in particular a transmission device according to one of Claims 1 to 8, having multiple shift elements (A to F) for realizing different transmission ratios ("1" to "9", "R") with different support factors, wherein at least one of the shift elements (A, E) must be connected into and/or disconnected from a power flow in order to realize at least two transmission ratios with different support factors, **characterized in that**, in order to realize a first transmission ratio ("1"), in the presence of which a relatively high support factor is present in the region of the shift element (A), an actuating piston (5) of a first shift element (A) is acted on in the region of a first active surface (5A, 32A) with an actuating force acting in the closing direction of the first shift element (A), and in order to realize a different transmission ratio ("4", "6"), in the presence of which a relatively low support factor is present in the region of the first shift element (A), said actuating piston is additionally acted on in the region of a second active surface (5B, 32B) with an actuating force acting in the opening direction of the first shift element (A), wherein the actuating force acting in the opening direction of the first shift element (A) acts on the second active surface (5B, 32B) of the actuating piston (5) of the shift element (A) as a function of the actuation force, acting in the closing direction, of a second shift element (E).

## Revendications

1. Dispositif de transmission (1, 2, 3) avec au moins une commande de transmission électrohydraulique (21) et avec plusieurs paires de roues dentées embrayables et débrayables dans un flux de force au moyen d'éléments d'embrayage (A à E) actionnables par un fluide, par lesquels différents rapports ("1" à "9", "R") peuvent être représentés, dans lequel les éléments d'embrayage (A à F) peuvent être soumis chaque fois dans la région d'une première face active (5A, 32A) d'un piston d'actionnement (5) à une pression d'actionnement fluidique (p_A) agissant dans la direction de fermeture des éléments d'embrayage (A) et au moins un premier élément d'embrayage (A) et un deuxième élément d'embrayage (E) sont en liaison active, **caractérisé en ce qu'**au moins un piston d'actionnement (5) du premier élément d'embrayage (A) peut être soumis dans la région d'une deuxième face active (5B, 32B) à une pression d'actionnement fluidique (p_A; p_E) agissant dans la direction d'ouverture du premier élément d'embrayage (A) en fonction d'une pression d'actionnement (p_E) du deuxième élément d'embrayage (E), **en ce qu'**une chambre de piston (9) du premier élément d'embrayage (A) limitée par la deuxième face active (5B, 32B) du piston d'actionnement (5) du premier élément d'embrayage (A) est réalisée séparément d'une chambre de piston du deuxième élément d'embrayage (E) limitée par la première face active (5A, 32A) du piston d'actionnement et une région du deuxième élément d'embrayage (E) conduisant une pression d'actionnement (p_E) ou une région du premier élément d'embrayage (A) conduisant une pression d'actionnement (p_A) est ou peut être reliée à la chambre de piston (9) limitée par la deuxième face active (5B) du piston d'actionnement (5) du premier élément d'embrayage (A).

2. Dispositif de transmission selon la revendication 1, **caractérisé en ce que** le premier élément d'embrayage (A) est réalisé avec un système de ressort de rappel (10) agissant sur le piston d'actionnement (5) dans la direction d'ouverture du premier élément d'embrayage (A).

3. Dispositif de transmission selon la revendication 1 ou 2, **caractérisé en ce que** le piston d'actionnement (5) du premier élément d'embrayage (A) destiné à représenter un premier rapport ("1"), pendant lequel la pression d'actionnement (p_E) du deuxième élément d'embrayage (E) est essentiellement au moins à peu près nulle et un facteur de soutien (SA) est plus élevé que pendant la représentation d'un deuxième rapport ("4", "6"), pour lequel la pression d'actionnement (p_E) du deuxième élément d'embrayage (E) correspond à un niveau de pression de fermeture du deuxième élément d'embrayage (E), peut être soumis dans la région de la deuxième face active (5B, 32B) à une pression d'actionnement, qui est au moins à peu près nulle.

4. Dispositif de transmission selon l'une quelconque des revendications 1 à 3, **caractérisé en ce que** la première face active (5A, 32A) du piston d'actionnement (5) du premier élément d'embrayage (A) est plus grande que la deuxième face active (5B, 32B) du piston d'actionnement (5) du premier élément d'embrayage (A) et une région du premier élément d'embrayage (A) conduisant une pression d'actionnement (p_A) peut être mise en liaison active avec la chambre de piston (9) limitée par la deuxième face active (5B, 32B) du piston d'actionnement (5) du premier élément d'embrayage (A) par un système de soupape (11) actionnable en fonction de la pression d'actionnement (p_E) du deuxième élément d'embrayage (E).

5. Dispositif de transmission selon la revendication 4, **caractérisé en ce que** le système de soupape (11) est réalisé sous la forme d'une soupape d'inversion réversible en fonction de la pression d'actionnement (p_E) du deuxième élément d'embrayage (E), avec un élément de piston (12) auquel la pression d'actionnement (p_A) du premier élément d'embrayage (A) et la pression d'actionnement (p_E) du deuxième élément d'embrayage (E) peuvent être appliquées.

6. Dispositif de transmission selon l'une quelconque des revendications 1 à 5, **caractérisé en ce que** le piston d'actionnement (5) du premier élément d'embrayage (A) est disposé de façon mobile longitudinalement sur un arbre (29) et est en liaison active par au moins un élément d'entraînement (30, 31) pénétrant dans l'arbre (29) avec un piston différentiel (32) disposé de façon mobile longitudinalement dans l'arbre (29), qui peut être soumis dans la région d'une face active (32A) à la pression d'actionnement (p_A) du premier élément d'embrayage (A) agissant sur le piston différentiel (32) dans la direction de fermeture du premier élément d'embrayage (A) et dans la région d'une autre face active (32B) à la pression d'actionnement (p_E) du deuxième élément d'embrayage (E) agissant sur le piston différentiel (32) dans la direction d'ouverture du premier élément d'embrayage (A).

7. Dispositif de transmission selon l'une quelconque des revendications 1 à 6, **caractérisé en ce que** la pression d'actionnement (p_A) du premier élément d'embrayage (A) est réglable essentiellement à zéro pendant un fonctionnement d'urgence au moyen de la commande de transmission (21), tandis que la pression d'actionnement (p_E) du deuxième élément d'embrayage (E) peut être élevée à la pression maximale du système au moyen de la commande de transmission (21).

8. Dispositif de transmission selon l'une quelconque des revendications 1 à 7, **caractérisé en ce que** le premier élément d'embrayage (A) se présente sous la forme d'un élément d'embrayage à crabot ou à friction.

9. Procédé de mise en oeuvre d'un dispositif de transmission (1), en particulier d'un dispositif de transmission selon l'une quelconque des revendications 1 à 8, avec plusieurs éléments d'embrayage (A à F) pour représenter différents rapports ("1" à "9", "R") avec différents facteurs de soutien, dans lequel au moins un des éléments d'embrayage (A, E) pour représenter au moins deux rapports doit être embrayé et/ou débrayé dans un flux de force avec des facteurs de soutien de niveaux différents, **caractérisé en ce que** l'on soumet un piston d'actionnement (5) d'un premier élément d'embrayage (A) pour représenter un premier rapport ("1"), pendant lequel un facteur de soutien plus élevé est présent dans la région de l'élément d'embrayage (A), dans la région d'une première face active (5A, 32A) à une force d'actionnement agissant dans la direction de fermeture du premier élément d'embrayage (A), et pour représenter un autre rapport ("4", "6"), pendant lequel un facteur de soutien moins élevé est présent dans la région du premier élément d'embrayage (A), en outre dans la région d'une deuxième face active (5B, 32B) à une force d'actionnement agissant dans la direction d'ouverture du premier élément d'embrayage (A), dans lequel la force d'actionnement agissant dans la direction d'ouverture du premier élément d'embrayage (A) s'applique à la deuxième face active (5B, 32B) du piston d'actionnement (5) de l'élément d'embrayage (A) en fonction de la force d'actionnement d'un deuxième élément d'embrayage (E) agissant dans la direction de fermeture.
